(19)

Europäisches
Patentamt
European
Patent Office
Office européen
des brevets

(11) **EP 3 384 664 B1**

(12) **EUROPEAN PATENT SPECIFICATION**

(45) Date of publication and mention
of the grant of the patent:
**06.01.2021 Bulletin 2021/01**

(51) Int Cl.:
***H04M 3/523*** *(2006.01)*

(21) Application number: **16823038.1**

(86) International application number:
**PCT/IB2016/001762**

(22) Date of filing: **22.11.2016**

(87) International publication number:
**WO 2017/093798 (08.06.2017 Gazette 2017/23)**

(54) **TECHNIQUES FOR HYBRID BEHAVIORAL PAIRING IN A CONTACT CENTER SYSTEM**

TECHNIKEN FÜR EIN HYBRID-VERHALTENSBASIERTES ANRUFVERTEILUNGSSYSTEM IN EINEM CALL CENTER

TECHNIQUES POUR UN UN SYSTÈME DE DISTRIBUTION D'APPELS DANS UN CENTRE D'APPEL, PARTIELLEMENT BASÉ SUR LE COMPORTEMENT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **01.12.2015 US 201514956086**

(43) Date of publication of application:
**10.10.2018 Bulletin 2018/41**

(73) Proprietor: **Afiniti Europe Technologies Limited
Altrincham, Cheshire WA14 2DT (GB)**

(72) Inventors:
• **CHISHTI, Zia
Washington
DC 20005 (US)**

• **KHATRI, Vikash
Alexandria, Virginia 22310 (US)**

(74) Representative: **Brunner, John Michael Owen
Carpmaels & Ransford LLP
One Southampton Row
London WC1B 5HA (GB)**

(56) References cited:
**WO-A2-2010/053701    US-A1- 2009 190 740
US-A1- 2009 323 921    US-A1- 2010 111 285
US-A1- 2010 111 287    US-A1- 2013 251 137
US-A1- 2014 341 370**

## Description

## FIELD OF THE DISCLOSURE

This disclosure generally relates to contact centers and, more particularly, to techniques for hybrid behavioral pairing in a contact center system.

## BACKGROUND OF THE DISCLOSURE

A typical contact center algorithmically assigns contacts arriving at the contact center to agents available to handle those contacts. At times, the contact center may have agents available and waiting for assignment to inbound or outbound contacts (*e.g.*, telephone calls, Internet chat sessions, email) or outbound contacts. At other times, the contact center may have contacts waiting in one or more queues for an agent to become available for assignment.

In some typical contact centers, contacts are assigned to agents ordered based on time of arrival, and agents receive contacts ordered based on the time when those agents became available. This strategy may be referred to as a "first-in, first-out", "FIFO", or "round-robin" strategy. In some contact centers, contacts or agents are assigned into different "skill groups" or "queues" prior to applying a FIFO assignment strategy within each such skill group or queue. These "skill queues" may also incorporate strategies for prioritizing individual contacts or agents within a baseline FIFO ordering. For example, a high-priority contact may be given a queue position ahead of other contacts who arrived at an earlier time, or a high-performing agent may be ordered ahead of other agents who have been waiting longer for their next call. Regardless of such variations in forming one or more queues of callers or one or more orderings of available agents, contact centers typically apply FIFO to the queues or other orderings. Once such a FIFO strategy has been established, assignment of contacts to agents is automatic, with the contact center assigning the first contact in the ordering to the next available agent, or assigning the first agent in the ordering to the next arriving contact. In the contact center industry, the process of contact and agent distribution among skill queues, prioritization and ordering within skill queues, and subsequent FIFO assignment of contacts to agents is managed by a system referred to as an "Automatic Call Distributor" ("ACD").

Some contact centers may use a "performance based routing" or "PBR" approach to ordering the queue of available agents. For example, when a contact arrives at a contact center with a plurality of available agents, the ordering of agents available for assignment to that contact would be headed by the highest-performing available agent (*e.g.,* the available agent with the highest sales conversion rate, the highest customer satisfaction scores, the shortest average handle time, the highest performing agent for the particular contact profile, the highest customer retention rate, the lowest customer retention cost, the highest rate of first-call resolution). PBR ordering strategies attempt to maximize the expected outcome of each contact-agent interaction but do so typically without regard for utilizing agents in a contact center uniformly. Consequently, higher-performing agents may receive noticeably more contacts and feel overworked, while lower-performing agents may receive fewer contacts and idle longer, potentially reducing their opportunities for training and improvement as well as potentially reducing their compensation.

In view of the foregoing, it may be understood that there is a need for a system that both attempts to utilize agents more evenly than PBR while improving contact center performance beyond what FIFO strategies deliver. US 2014/341370 A1 discloses techniques for hybrid behavioral pairing in a contact center system. US 2013/251137 A1 discloses further techniques for hybrid behavioral pairing in a contact center system.

## SUMMARY OF THE DISCLOSURE

The extent of protection conferred by this disclosure is determined by the appended claims.

## BRIEF DESCRIPTION OF THE DRAWINGS

In order to facilitate a fuller understanding of the present disclosure, reference is now made to the accompanying drawings, in which like elements are referenced with like numerals. These drawings should not be construed as limiting the present disclosure, but are intended to be illustrative only.

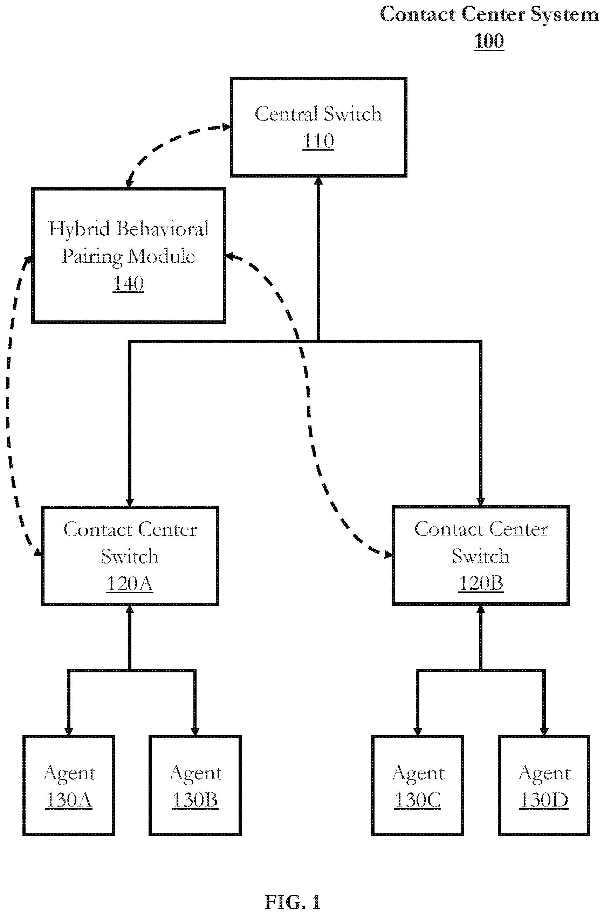

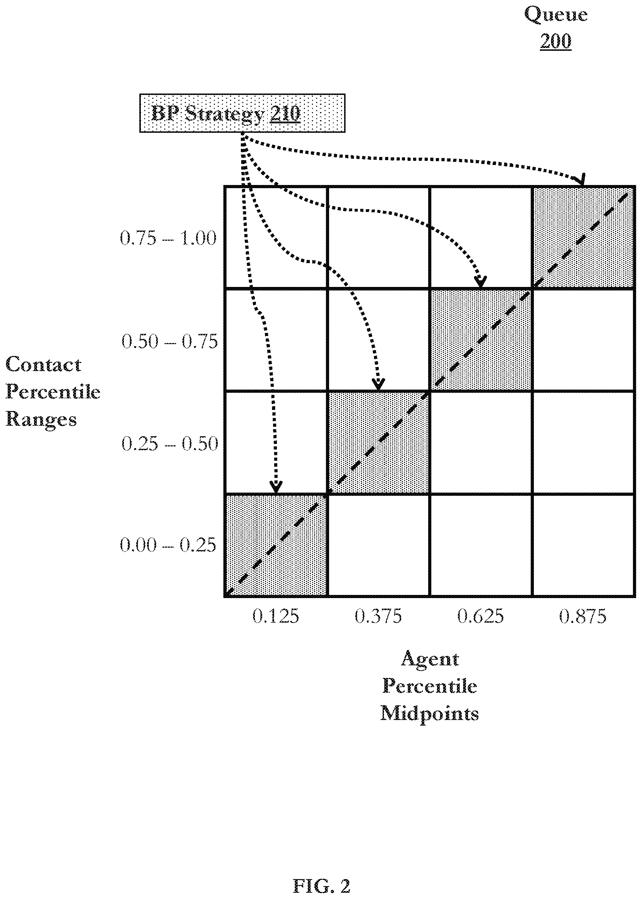

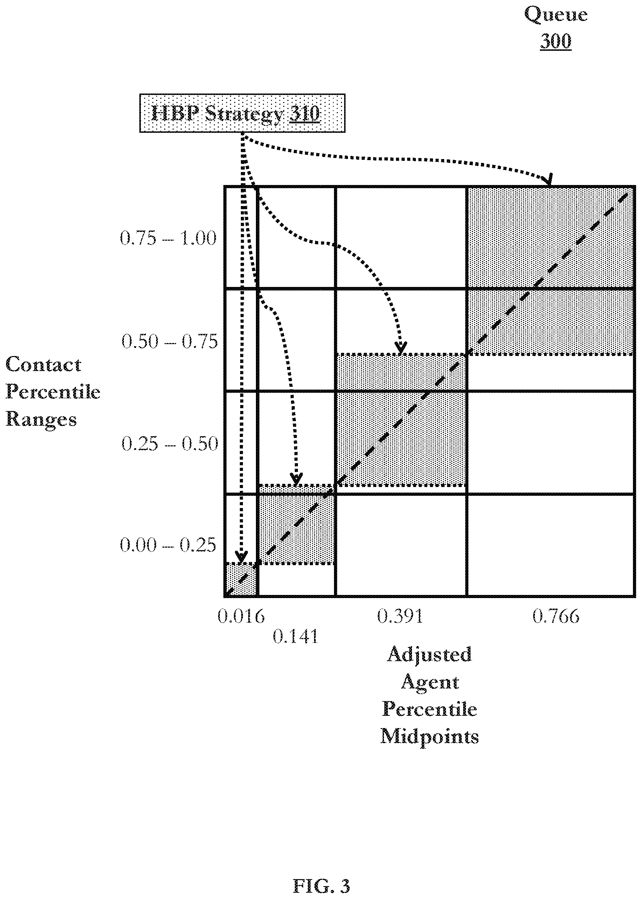

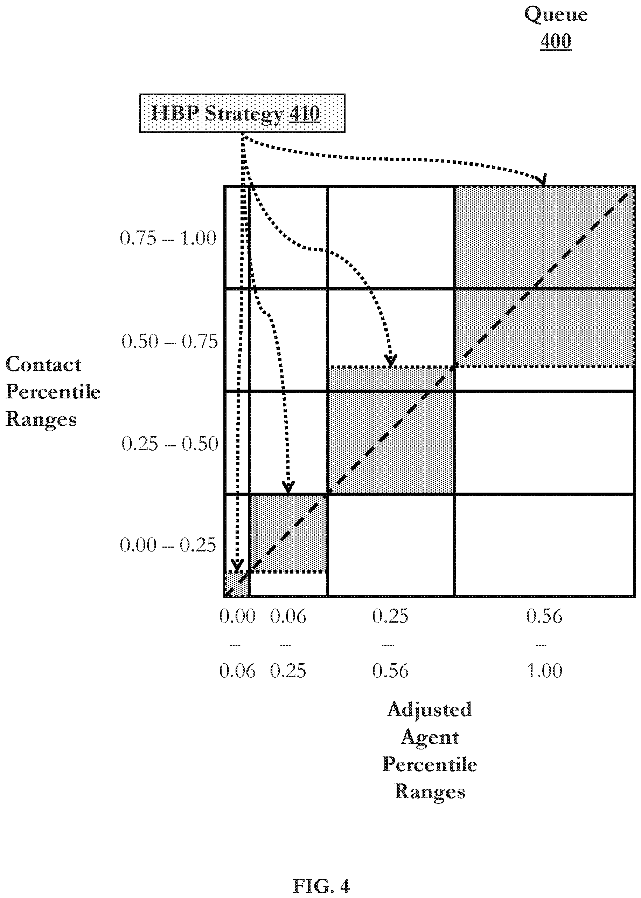

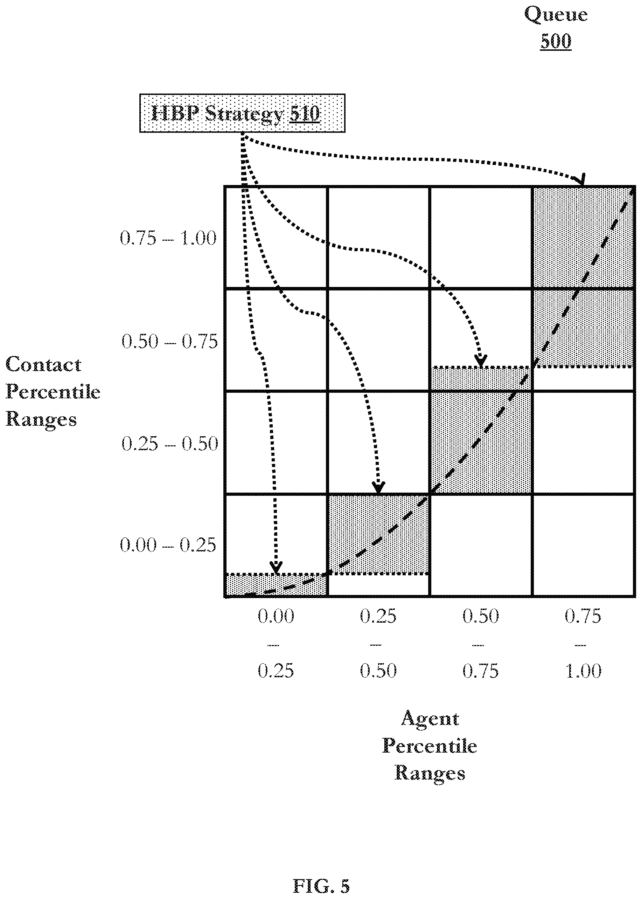

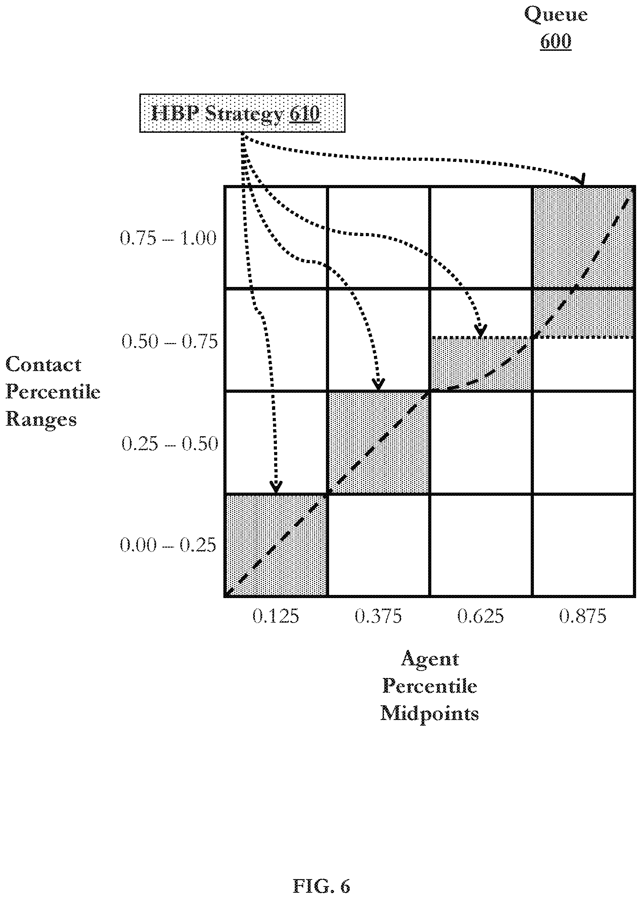

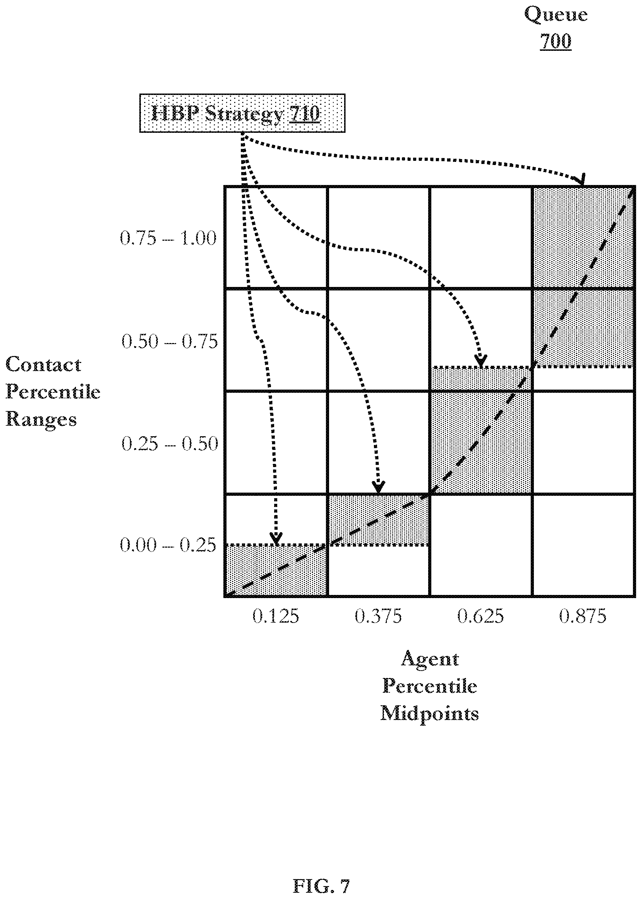

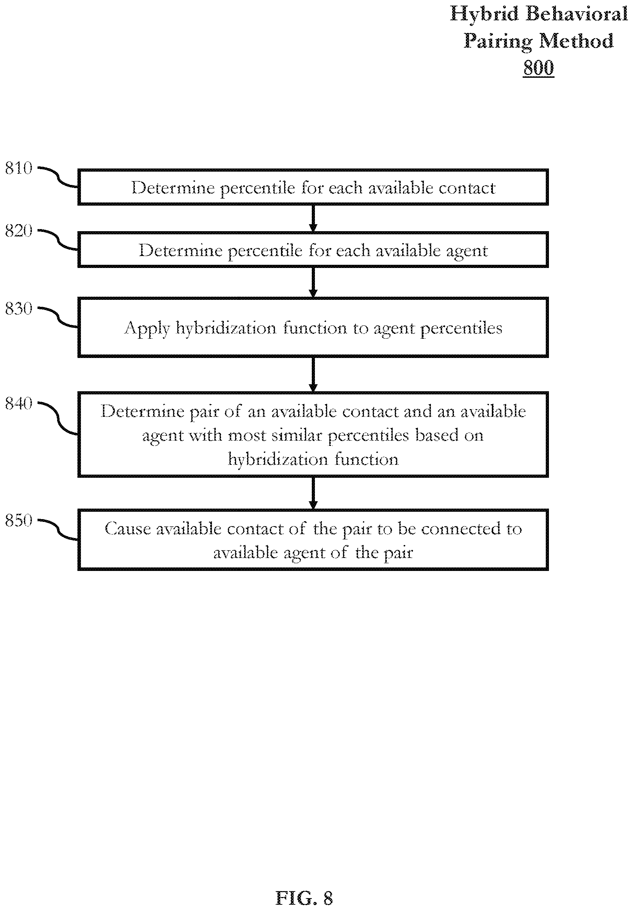

FIG. 1 shows a block diagram of a contact center according to embodiments of the present disclosure. FIG. 2 shows a schematic representation of a queue according to embodiments of the present disclosure. FIG. 3 shows a schematic representation of a queue according to embodiments of the present disclosure. FIG. 4 shows a schematic representation of a queue according to embodiments of the present disclosure. FIG. 5 shows a schematic representation of a queue according to embodiments of the present disclosure. FIG. 6 shows a schematic representation of a queue according to embodiments of the present disclosure. FIG. 7 shows a schematic representation of a queue according to embodiments of the present disclosure. FIG. 8 shows a flow diagram of a hybrid behavioral pairing method according to embodiments of the present disclosure.

## DETAILED DESCRIPTION

A typical contact center algorithmically assigns contacts arriving at the contact center to agents available to handle those contacts. At times, the contact center may be in an "L1 state" and have agents available and waiting for assignment to inbound or outbound contacts (*e.g.*, telephone calls, Internet chat sessions, email). At other times, the contact center may be in an "L2 state" and have contacts waiting in one or more queues for an agent to become available for assignment. Such L2 queues could be inbound, outbound, or virtual queues. Contact center systems implement various strategies for assigning contacts to agents in both L1 and L2 states.

The present disclosure generally relates to contact center systems, traditionally referred to as "Automated Call Distribution" ("ACD") systems. Typically, such an ACD process is subsequent to an initial "Skills-based Routing" ("SBR") process that serves to allocate contacts and agents among skill queues within the contact center. Such skill queues may distinguish contacts and agents based on language capabilities, customer needs, or agent proficiency at a particular set of tasks.

The most common traditional assignment method within a queue is "First-In, First-Out" or "FIFO" assignment wherein the longest-waiting contact is assigned to the longest-waiting agent. Some contact centers implement "Performance-based Routing" ("PBR") wherein the longest waiting contact is assigned to the highest performing available agent. Variations of both such assignment methods commonly exist. For example, FIFO may select the least utilized available agent rather than the longest waiting agent. More generally, FIFO may select an agent most lagging in a particular metric or metrics. FIFO may also order queues of contacts where higher priority contact types may be positioned in a queue ahead of lower priority contact types. Similarly, PBR may be modified such that agent performance rankings may be altered depending on the type of contact pending assignment (*e.g.*, Bala et al., U.S. Patent No. 7,798,876). PBR may also be modified to avoid an extreme unbalancing of agent utilization by setting limits on maximum or minimum agent utilization relative to peers.

Variations of FIFO typically target "fairness" inasmuch as they are designed to balance the allocation of contacts to agents over time. PBR adopts a different approach in which the allocation of contacts to agents is purposefully skewed to increase the utilization of higher-performing agents and reduce the utilization of lower-performing agents. PBR may do so despite potential negative impacts on morale and productivity over time resulting from fatigue in over-utilized agents and inadequate opportunity for training and compensation in under-utilized agents.

The present disclosure refers to optimized strategies for assigning contacts to agents that improve upon traditional assignment methods, such as "Behavioral Pairing" or "BP" strategies. Behavioral Pairing targets balanced utilization of agents within queues (*e.g.*, skill queues) while simultaneously improving overall contact center performance potentially beyond what FIFO or PBR methods will achieve in practice. This is a remarkable achievement inasmuch as BP acts on the same contacts and same agents as FIFO or PBR methods, approximately balancing the utilization of agents as FIFO provides, while improving overall contact center performance beyond what either FIFO or PBR provide in practice.

BP improves performance by assigning agent and contact pairs in a fashion that takes into consideration the assignment of potential *subsequent* agent and contact pairs such that when the benefits of *all* assignments are aggregated they may exceed those of FIFO and PBR strategies. In some cases, BP results in instant contact and agent pairings that may be the reverse of what FIFO or PBR would indicate. For example, in an instant case BP might select the shortest-waiting contact or the lowest-performing available agent. BP respects "posterity" inasmuch as the system allocates contacts to agents in a fashion that inherently forgoes what may be the highest-performing selection at the *instant moment* if such a decision increases the probability of better contact center performance *over time.*

As explained in detail below, embodiments of the present disclosure relate to techniques for "hybrid behavioral pairing" ("HBP"), which combines strategies of BP with strategies of PBR, in a manner in which a contact center administrator may adjust a balance between the two. For example, a contact center administrator may choose to have BP be the dominant mechanism for assigning agents from within a group with a bias toward performance-based routing. Instead of targeting a balanced agent utilization, HBP may target a skewed agent utilization. In some configurations, this bias or skew may be slight; for example, an HBP strategy may be calibrated to reduce or limit the number of occasions in which any one agent in a queue (*e.g.*, skill queue) receives more than one contact pairing before other agents in the queue.

FIG. 1 shows a block diagram of a contact center system 100 according to embodiments of the present disclosure. The description herein describes network elements, computers, and/or components of a system and method for simulating contact center systems that may include one or more modules. As used herein, the term "module" may be understood to refer to computing software, firmware, hardware, and/or various combinations thereof. Modules, however, are not to be interpreted as software which is not implemented on hardware, firmware, or recorded on a processor readable recordable storage medium (*i.e.*, modules are not software *per se*). It is noted that the modules are exemplary. The modules may be combined, integrated, separated, and/or duplicated to support various applications. Also, a function described herein as being performed at a particular module may be performed at one or more other modules and/or by one or more other devices instead of or in addition to the function performed at the particular module. Further, the modules may be implemented across multiple devices and/or other components local or remote to one another. Additionally, the modules may be moved from one device and added to another device, and/or may be included in both devices.

As shown in FIG. 1, the contact center system may include a central switch 110. The central switch 110 may receive incoming contacts (*e.g.*, callers) or support outbound connections to contacts via a dialer, a telecommunications network, or other modules (not shown). The central switch 110 may include contact routing hardware and software for helping to route contacts among one or more contact centers, or to one or more PBX/ACDs or other queuing or switching components within a contact center.

The central switch 110 may not be necessary if there is only one contact center, or if there is only one PBX/ACD routing component, in the contact center system 100. If more than one contact center is part of the contact center system 100, each contact center may include at least one contact center switch (*e.g.*, contact center switches 120A and 120B). The contact center switches 120A and 120B may be communicatively coupled to the central switch 110.

Each contact center switch for each contact center may be communicatively coupled to a plurality (or "pool") of agents. Each contact center switch may support a certain number of agents (or "seats") to be logged in at one time. At any given time, a logged-in agent may be available and waiting to be connected to a contact, or the logged-in agent may be unavailable for any of a number of reasons, such as being connected to another contact, performing certain post-call functions such as logging information about the call, or taking a break.

In the example of FIG. 1, the central switch 110 routes contacts to one of two contact centers via contact center switch 120A and contact center switch 120B, respectively. Each of the contact center switches 120A and 120B are shown with two agents each. Agents 130A and 130B may be logged into contact center switch 120A, and agents 130C and 130D may be logged into contact center switch 120B.

The contact center system 100 may also be communicatively coupled to an integrated service from, for example, a third party vendor. In the example of FIG. 1, hybrid behavioral pairing module 140 may be communicatively coupled to one or more switches in the switch system of the contact center system 100, such as central switch 110, contact center switch 120A, or contact center switch 120B. In some embodiments, switches of the contact center system 100 may be communicatively coupled to multiple hybrid behavioral pairing modules. In some embodiments, hybrid behavioral pairing module 140 may be embedded within a component of a contact center system (*e.g.*, embedded in or otherwise integrated with a switch).

The hybrid behavioral pairing module 140 may receive information from a switch (*e.g.*, contact center switch 120A) about agents logged into the switch (*e.g.*, agents 130A and 130B) and about incoming contacts via another switch (*e.g.*, central switch 110) or, in some embodiments, from a network (*e.g.*, the Internet or a telecommunications network) (not shown).

The hybrid behavioral pairing module 140 may process this information and to determine which contacts should be paired (*e.g.*, matched, assigned, distributed, routed) with which agents. For example, multiple agents are available and waiting for connection to a contact (L1 state), and a contact arrives at the contact center via a network or central switch. As explained below, without the hybrid behavioral pairing module 140 or similar behavioral pairing module, a contact center switch will typically automatically distribute the new contact to whichever available agent has been waiting the longest amount of time for an agent under a "fair" FIFO strategy, or whichever available agent has been determined to be the highest-performing agent under a PBR strategy.

With the hybrid behavioral pairing module 140 or a similar behavioral pairing module, contacts and agents may be given scores (*e.g.*, percentiles or percentile ranges/bandwidths) according to a pairing model or other artificial intelligence data model, so that a contact may be matched, paired, or otherwise connected to a preferred agent. In some embodiments, the hybrid behavioral pairing module 140 may be configured with an HBP strategy that blends the BP and PBR strategies, targeting biased rather than balanced agent utilization.

In an L2 state, multiple contacts are available and waiting for connection to an agent, and an agent becomes available. These contacts may be queued in a contact center switch such as a PBX or ACD device ("PBX/ACD"). Without the hybrid behavioral pairing module 140 or a similar behavioral pairing module, a contact center switch will typically connect the newly available agent to whichever contact has been waiting on hold in the queue for the longest amount of time as in a "fair" FIFO strategy or a PBR strategy when agent choice is not available. In some contact centers, priority queuing may also be incorporated.

With the hybrid behavioral pairing module 140 or similar behavioral pairing module in an L2 scenario, as in the L1 state described above, contacts and agents may be given percentiles (or percentile ranges/bandwidths, etc.) according to, for example, a model, such as an other artificial intelligence model, so that an agent coming available may be matched, paired, or otherwise connected to a preferred contact.

Under an HBP strategy, a hybridization factor or function may be applied to one or more orderings of agents to achieve the desired balance between a BP strategy, which targets a balanced utilization, and a PBR strategy, which targets a highly skewed utilization during periods of time when a contact center is in an L1 state (*i.e.*, multiple agents available for assignment).

In some embodiments, a hybridization function may combine two (or more) orderings or other types of ranking systems together. For example, a contact center may have four agents: Agent A, Agent B, Agent C, and Agent D ("A", "B", "C", and "D") available for pairing with a contact. The agents may be ordered according to multiple ordering systems. For example, under a typical FIFO strategy, the agents may be ordered according to how long each agent has been waiting for an assignment relative to the other agents. Under a typical PBR strategy, the agents may be ordered according to how well each agent performs for some metric relative to the other agents. Under a BP strategy, the agents may be ordered according to the quality of each agent's "behavioral fit" relative to the other agents.

One technique for combining two orderings is to determine a sum. For example, if a PBR strategy orders the four agents as A=1, B=2, C=3, and D=4, the PBR strategy would preferably pair highest-performing Agent A with the next contact. And if a BP strategy order the agents as A=4, B=2, C=3, D=1, the BP strategy would preferably pair best-fitting Agent D with the next contact. In this example of an HBP strategy, the sum of the two orderings would be A=5, B=4, C=6, D=5. This HBP strategy would preferably pair Agent B with the next contact, which is the second highest-performing and second best-fitting agent according to the original orderings.

Other embodiments may use other techniques for combining multiple orderings of agents. For example, the HBP ordering may be a product obtained by multiplying two or more orderings. For another example, the HBP ordering may be a weighted sum or product obtained by scaling the one or more of the orderings by a scaling factor. In this way, HBP may be configured to weight an agent's relative performance more or less than the agent's relative behavioral fit.

FIG. 2 shows a queue 200 according to embodiments of the present disclosure operating under BP Strategy 210. Queue 200 represents a simplified hypothetical case in which four types of contacts may be assigned to any of four agents in an environment in which the contact center is seeking to maximize a desired metric (*e.g.*, sales). The four evenly distributed types of contacts are assigned percentile ranges (or "bandwidths") of 0.00 to 0.25 ("0-25% Contacts"), 0.25 to 0.50 ("25-50% Contacts"), 0.50 to 0.75 ("50-75% Contacts"), and 0.75 to 1.00 (75-100% Contacts). The four agents occupy equally-spaced percentile bandwidths and are assigned percentiles at the midpoints of their respective ranges: 0.00 to 0.25 ("0.125 Agent"), 0.25 to 0.50 ("0.375 Agent"), 0.50 to 0.75 ("0.625 Agent"), and 0.75 to 1.00 ("0.875 Agent"). The four agents may also be ordered by performance according to a desired metric (*e.g.*, sales), such that the lowest-performing agent is assigned the lowest percentile (the 0.125 Agent), and the highest-performing agent is assigned the highest percentile (the 0.875 Agent).

By applying a diagonal strategy, 0-25% Contacts may be preferably assigned to the 0.125 Agent, 25-50% Contacts may be preferably assigned to the 0.375 Agent, 50-75% Contacts may be preferably assigned to the 0.625 Agent, and 75-100% Contacts may be preferably assigned to the 0.875 Agent. BP Strategy 210 targets a balanced utilization, with each agent receiving approximately the same proportion of contacts over time. Accordingly, there is no bias toward a PBR strategy, under which agent utilization would be skewed toward utilizing the highest-performing 0.875 Agent more heavily.

One such technique for generating the performance-biased agent percentiles according to embodiments of the present disclosure is to adjust each agent's "initial" midpoint percentile ("$AP_{initial}$") by a hybridization function or factor, such that relatively higher-ordered (*e.g.*, higher-performing) agents occupy relatively larger bandwidths (*i.e.*, disproportionate bandwidths) and, consequently, receive relatively more contacts than lower-ordered (*e.g.*, lower-performing) agents. For example, the hybridization function may raise each agent's percentile to a power, as in Equation 1 below:

$$AP_{adjusted} = AP_{initial}{}^{\kappa} \qquad (Eqn.\ 1)$$

The power parameter (*e.g.*, "$\kappa$" or a "Kappa parameter" as in Equation 1 may determine the amount of bias toward PBR, with higher values of Kappa generating greater amounts of bias. A Kappa parameter of 1.0 would generate no bias ($AP_{adjusted} = AP_{initial}$). Thus, this "neutral" value for Kappa results in targeting a balanced agent utilization. In fact, BP Strategy 210 is equivalent to a Kappa-based HBP strategy in which Kappa equals 1.0. As Kappa increases, the degree of agent utilization skew increases as bias toward PBR increases.

FIG. 3 shows a queue 300 that applies this technique using a Kappa value of 2.0. Queue 300 represents the same four types of contacts and the same four agents as in queue 200. However, in queue 300, the agents' percentile midpoints have been squared ($AP_{adjusted} = AP_{initial}{}^{2.0}$). Applying a diagonal strategy under HBP Strategy 310, the lowest-ordered agent ($AP_{adjusted} \approx 0.016$) would occupy the smallest bandwidth and receive the fewest contacts, and so on, up to the highest-ordered agent ($AP_{adjusted} \approx 0.766$), who would occupy the largest bandwidth and receive the most contacts.

In some embodiments, the bandwidth of each agent may be determined so that each agent's adjusted percentile midpoint is the midpoint of each agent's new, adjusted bandwidth. For example, the bandwidth of the lowest-ordered 0.016 agent may be approximately 0.000 to 0.031 In other embodiments, the bandwidth of each agent may be determined by equally distributing the "distance" between neighboring adjusted percentile midpoints. For example, the bandwidth of the lowest-ordered 0.016 agent may be approximately 0.000 to 0.079.

Another variation of the HBP technique applied to queue 300 in FIG. 3 is to adjust each agent's initial percentile ranges rather than each agent's initial midpoint percentile, as in Equation 2 below:

$$AP_{adjusted\_range} = AP_{initial\_range}{}^{\kappa} \qquad (Eqn.\ 2)$$

The effect would be the same: relatively higher-ordered (*e.g.*, higher-performing) agents occupy relatively larger bandwidths and, consequently, receive relatively more contacts than lower-ordered (*e.g.*, lower-performing) agents.

FIG. 4 shows a queue 400 that applies this technique using a Kappa value of 2.0. Queue 400 represents the same four contact types and agents as in queue 300. However, in queue 400, the agents' initial percentile ranges have been squared ($AP_{adjusted\_range}$ = $AP_{initial\_range}^{2.0}$) instead of their initial midpoint percentiles. Applying a diagonal strategy under HBP Strategy 410, the lowest-ordered agent (occupying adjusted percentile range from 0.00 to approximately 0.06 with a midpoint of approximately 0.03) would receive the fewest contacts, and so on, up to the highest-ordered agent (occupying adjusted percentile range from approximately 0.56 to 1.00 with a midpoint of approximately 0.82) would receive the most contacts.

Conceptually, the target skewed utilization would result in the bottom-half of agents receiving approximately one-fourth of the contacts, and the top-half of the agents receiving the other three-fourths. Other techniques for visualizing or implementing these hybridization functions or factors include adjusting the "fitting function" of the diagonal strategy.

FIG. 5 shows a queue 500 with the same agent percentiles and ranges as in queue 100 (FIG. 1), and they have not been adjusted. Unlike queue 100, in which BP Strategy 110 may be visualized by a 45-degree diagonal line (CP=AP), HBP strategy 510 may be visualized by a different, hybridized fitting function (*e.g.*, "bending" or "bowing" the diagonal line). In the example, of FIG. 5, the fitting function is an exponential function, as in Equation 3 below:

$$CP = AP^{\kappa} \qquad (\text{Eqn. 3})$$

Conceptually, instead of determining preferred pairings by selecting pairs closest to the diagonal CP=AP as in BP Strategy 110, preferred pairings in HBP Strategy 510 may be determined by selecting pairs closest to the exponential $CP=AP^{2.0}$ as in queue 500 where Kappa equals 2.0. Notably, the effect of fitting to a curve (*e.g.*, $CP=AP^{2.0}$) is the continuous mathematical analogue to the discontinuous process of broadening or shrinking percentile ranges (*e.g.*, squaring the percentile ranges and then fitting to CP=AP), as in queue 400 and HBP Strategy 410 (FIG. 4).

Many variations of hybridization functions may be used to vary the target utilization of an agent as a function of the agent's performance or other ordering or metric. For example, a hybridization function may be a piecewise function.

FIG. 6 shows a queue 600 and HBP Strategy 610 that affects the utilization of the bottom-half of the agents differently than that of the top-half of the agents.

For example, the contact center may determine that half of the contacts should be distributed to below-average agents in a balanced manner (*e.g.*, Kappa = 1.0), but the other half of the contacts should be distributed to above-average agents according to their relative performance (*e.g.*, Kappa > 1.0). Thus, contacts ranging from 0% to 50% may be distributed to the lower-performing agents (0.125 Agent and 0.375 Agent) evenly, visualized as a fit along the 45-degree line CP=AP for $0.00 \leq AP < 0.50$ (or, *e.g.*, $0.00 < AP \leq 0.50$, etc.). Contacts ranging from 50% to 100% may be distributed to the higher-performing agents (0.625 Agent and 0.875 Agent) as a function of their performance, such as an exponential function scaled to this portion of contacts and agents. HBP Strategy 610 may be visualized as a fit along the exponential curve $CP=2(AP-0.5)^{2.0}+0.5$ for Kappa = 2.0 and $0.50 \leq AP < 1.00$.

Incidentally, such a strategy would result in *some* higher-performing agents (here, the 0.625 Agent) receiving fewer contacts over time than its lower-performing peers. FIG. 7 shows a queue 700 and HBP Strategy 710 that also affects the utilization of the bottom-half of the agents differently than that of the top-half of the agents using a piecewise hybridization function. For example, the contact center may determine that a larger portion of contacts should be distributed to above-average agents according to their relative performance (*e.g.*, Kappa > 1.0), and the remaining portion of contacts should be distributed to below-average agents in a balanced manner (*e.g.*, Kappa = 1.0). Thus, for Kappa = 2.0 and $AP \geq 0.50$ (or AP > 0.50), pairings may be fit along the exponential curve $CP=AP^{2.0}$. For Kappa = 1.0 and AP < 0.50, pairings may be fit along a linear function, scaled to this portion of contacts and agents: CP=0.5·AP.

In real-world contact centers, there may be more or fewer agents, and more or fewer contact types in a queue. In these examples, each contact type is evenly distributed within the total range of percentile ranks; however, in some contact centers, the distribution of ranges could vary based on, for example, the frequency at which contacts of a particular type arrive at a contact center relative to the frequency at which contacts of other types arrive. The simplified examples described above, with four agents and four contact types, are used to illustrate the effects of an implicit form of HBP such as those based on a Kappa parameter and exponential scaling or other hybridization functions. However, HBP-including Kappa-based techniques-may also be applied to bigger, more complex, real-world contact centers.

In some embodiments, Kappa may be selected or adjusted to vary the bias toward PBR (or skew in agent utilization). For example, Kappa less than 2.0 (*e.g.*, 1.0, 1.01, 1.1, 1.2, 1.5, etc.) would result in relatively less bias toward PBR than the examples above in which Kappa equals 2.0. For example, if a contact center administrator wanted to avoid occurrences of higher-performing agents receiving multiple calls while a lower-performing agent remains idle, a significantly lower value of Kappa may be more appropriate than 2.0. Conversely, Kappa greater than 2.0 (*e.g.*, 2.01, 2.1, 2.5, 200.0, etc.) would result in relatively more bias toward PBR.

Importantly, the effect on agent utilization is subtle under Kappa-based HBP strategies inasmuch as they controllably affect the degree to which agents wait between contacts. By increasing the power to which agent percentiles are raised, this invention controllably decreases the average time between contacts for higher-ordered agents and increases the average time between contacts for comparatively lower-ordered agents. Similarly, reducing the power to which agent percentiles are raised has the reverse effect. For neutral BP strategies (*e.g.*, Kappa = 1.0), each agent has approximately the same expected average waiting time between contacts. As Kappa increases, the relative expected average waiting time progressively (*e.g.*, exponentially) decreases as relative agent performance increases.

In some embodiments, an HBP strategy may target relative agent utilization using potentially more gradual techniques. For example, agents may be assigned relative "utilization adjustments" based on agent ordering. In one example, the highest-ordered agent may be assigned a relative utilization adjustment of 100%, the second-highest agent a relative utilization of 99%, the third 98%, and so on. In this example, the target utilization of the second-highest ordered agent would be 99% of the target utilization of the highest-performing agent. The relative utilization adjustment may be more aggressive in other configurations. For example, the highest-ordered agent may be assigned a relative utilization of 100%, the second-highest agent 90%, the third 80%, and so on. In this example, the target utilization of the second-highest ordered agent would be 90% of the target utilization of the highest-performing agent.

FIG. 8 shows a hybrid behavioral pairing method 800 according to embodiments of the present disclosure. At block 810, hybrid behavioral pairing method 800 may begin.

At block 810, a percentile (or *n*-tile, quantile, percentile range, bandwidth, or other type of "score" or range of scores, etc.) may be determined for each available contact. For situations in which contacts are waiting on hold in a queue, percentiles may be determined for each of the contacts waiting on hold in the queue. For situations in which contacts are not waiting on hold in a queue, a percentile may be assigned to the next contact to arrive at the contact center. The percentiles may be bounded by a range of percentiles defined for a particular type or group of contacts based on information about the contact. The percentile bounds or ranges may be based on a frequency distribution or other metric for the contact types. The percentile may be randomly assigned within the type's percentile range.

In some embodiments, percentiles may be ordered according to a particular metric or combination of metrics to be optimized in the contact center, and a contact determined to have a relatively high percentile may be considered to be a "higher-value" contact for the contact center inasmuch as these contacts are more likely to contribute to a higher overall performance in the contact center. For example, a relatively high-percentile contact may have a relatively high likelihood of making a purchase.

In some embodiments, a percentile may be determined for a contact at the time the contact arrives at the contact center. In other embodiments, a percentile may be determined for the contact at a later point in time, such as when the contact arrives at a particular skill queue or ACD system, or when a request for a pairing is made.

After a percentile has been determined for each contact available for pairing, behavioral pairing method 800 may proceed to block 820. In some embodiments, block 820 may be performed prior to, or simultaneously with, block 810.

At block 820, a percentile may be determined for each available agent. For situations in which agents are idle, waiting for contacts to arrive, percentiles may be determined for each of the idle agents. For situations in which agents for a queue are all busy, a percentile may be determined to the next agent to become available. The percentiles may be bounded by a range of percentiles (*e.g.*, "bandwidth") defined based on all of agents assigned to a queue (*e.g.,* a skill queue) or only the available agents assigned to a particular queue. In some embodiments, the bounds or ranges of percentiles may be based on a desired agent utilization (*e.g.*, for fairness, efficiency, or performance).

In some embodiments, agent percentiles may be ordered according to a particular metric or combination of metrics to be optimized in the contact center, and an agent determined to have a relatively high percentile may be considered to be a higher-performing agent for the contact center. For example, a relatively high-percentile agent may have a relatively high likelihood of making a sale.

In some embodiments, an agent's percentile may be determined at the time the agent becomes available within the contact center. In other embodiments, a percentile may be determined at a later point in time, such as when a request for a pairing is made.

After a percentile has been determined for each available agent and contact, behavioral pairing method 800 may proceed to block 830.

At block 830, a hybridization function may be applied to agent percentiles (or agent percentile ranges or bandwidths). For example, a Kappa value may be determined for an exponential hybridization function or fitting curve or line. In some embodiments, the hybridization function may act on a single ordering that implicitly incorporates both behavioral fit and performance information. In other embodiments, the hybridization function may combine (*e.g.*, add, multiply, weight) multiple orderings of agents. After the hybridization function has been applied or otherwise determined or configured, hybrid behavioral pairing method 800 may proceed to block 840.

At block 840, a pair of an available contact and an available agent may be determined based on the percentiles (or percentile ranges) determined for each available contact at block 810 and for each available agent at block 820 based on a hybridization function. In some embodiments, the selection may be determined based on percentiles or percentile ranges for each available agent adjusted at block 830. In some embodiments, the pair may be determined according to a diagonal strategy, in which contacts and agents with more similar percentiles (or the most similar percentiles) may be selected for pairing. For example, a hybrid behavioral pairing module may select a contact-agent pairing with the smallest absolute difference between the contact's score and the agent's score. In some embodiments, the diagonal strategy may be visualized as a 45-degree diagonal line. In other embodiments, the diagonal strategy may be visualized as a hybridization function (*e.g.*, continuously differentiable functions such as an exponential function, a linear function, a logarithmic function, a sigmoidal function, a logistic function, a logit function, or not continuously differentiable functions such as piecewise functions).

In some situations, multiple agents may be idle when a contact arrives (an L1 state). Under HBP, the newly available contact may be paired with a selected one of the available agents that has an adjusted percentile or percentile range more similar to the contact's percentile than other available agents. In other situations, multiple contacts may be waiting in a queue when an agent becomes available (an L2 state). Under HBP, the newly available agent may be paired with a selected one of the contacts waiting in the queue that has a percentile more similar to the agent's adjusted percentile or percentile range than other contacts waiting in the queue.

In some situations, selecting a pairing based on similarity of scores may result in selecting an instant pairing that might not be the highest performing instant pairing, but rather increases the likelihood of better future pairings.

After a pairing has been determined at block 840, hybrid behavioral pairing method 800 may proceed to block 850. At block 850, modules within the contact center system may cause the contact and agent of the contact agent pair to be connected with one another. For example, a behavioral pairing module may indicate that an ACD system or other routing device may distribute a particular contact to a particular agent.

After connecting the contact and agent at block 850, behavioral pairing method 800 may end. In some embodiments, behavioral pairing method 800 may return to block 840 for determining one or more additional pairings (not shown). In other embodiments, behavioral pairing method 800 may return to block 810 or block 820 to determine (or re-determine) percentiles or percentile ranges for available contacts or agents (not shown), and subsequently apply (or reapply) a hybridization function at block 840.

At this point it should be noted that hybrid behavioral pairing in a contact center system in accordance with the present disclosure as described above may involve the processing of input data and the generation of output data to some extent. This input data processing and output data generation may be implemented in hardware or software. For example, specific electronic components may be employed in a behavioral pairing module or similar or related circuitry for implementing the functions associated with behavioral pairing in a contact center system in accordance with the present disclosure as described above. Alternatively, one or more processors operating in accordance with instructions may implement the functions associated with behavioral pairing in a contact center system in accordance with the present disclosure as described above. If such is the case, it is within the scope of the present disclosure that such instructions may be stored on one or more non-transitory processor readable storage media (*e.g.*, a magnetic disk or other storage medium), or transmitted to one or more processors via one or more signals embodied in one or more carrier waves.

The present disclosure is not to be limited in scope by the specific embodiments described herein. Indeed, other various embodiments of and modifications to the present disclosure, in addition to those described herein, will be apparent to those of ordinary skill in the art from the foregoing description and accompanying drawings. Thus, such other embodiments and modifications are intended to fall within the scope of the present disclosure. Further, although the present disclosure has been described herein in the context of at least one particular implementation in at least one particular environment for at least one particular purpose, those of ordinary skill in the art will recognize that its usefulness is not limited thereto and that the present disclosure may be beneficially implemented in any number of environments for any number of purposes.

**Claims**

1. A method for pairing in a contact center system (100), the contact center system comprising at least one switch (120A, 120B) communicatively coupled to a plurality of agents (130A, 130B, 130C, 130D), the method comprising:

   determining (810), by at least one processor, a percentile for a contact;
   determining (820), by the at least one processor, a percentile for each of the plurality of agents;
   applying (830), by the at least one processor, a hybridization function to each of the percentiles of the plurality of agents to adjust the percentile of each of the plurality of agents based on a behavioral pairing strategy for pairing and a performance-based routing strategy for pairing, wherein the hybridization function biases the behavioral pairing strategy for pairing toward the performance-based routing strategy for pairing; comparing (840), by the at least one processor, a first difference in percentile between the percentile of the contact and the adjusted percentile of a first agent in a first pair with a second difference in percentile between the percentile of the contact and the adjusted percentile of a second agent different from the first agent in a second pair; and
selecting (850), by the at least one processor, the first pair or the second pair for connection based on the comparing.

2. The method of claim 1, wherein comparing (840) based on the hybridization function further comprises applying, by the at least one processor, a bending diagonal strategy to the percentiles, wherein the bending diagonal strategy is generated as an exponential curve between the percentile of the contact and the adjusted percentiles of each of the plurality of agents, and wherein selecting (850) further comprises selecting, by the at least one processor, whichever of the first pair or the second pair is closest to the exponential curve.

3. The method of claim 1, wherein the percentile of the contact or the percentiles of the plurality of agents can be expressed as percentile ranges.

4. The method of claim 3, wherein applying (830) the hybridization function further comprises adjusting the percentile ranges of the plurality of agents.

5. The method of claim 4, wherein the adjusted percentile of each of the plurality of agents comprises a midpoint of a percentile range of each of the plurality of agents.

6. The method of claim 1, wherein determining a percentile for the contact (810) further comprises determining, by the at least one processor, a percentile range for a contact type of the contact proportionate to a frequency at which contacts of the contact type become available for assignment.

7. The method of claim 1, wherein the hybridization function enables controllably targeting, by the at least one processor, an unbalanced agent utilization.

8. The method of claim 7, wherein applying (830) the hybridization function further comprises determining a parameter corresponding to an extent of bias toward the performance-based routing strategy.

9. The method of claim 8, further comprising using the parameter within a continuously differentiable function.

10. The method of claim 8, further comprising using the parameter within a not continuously differentiable function.

11. The method of claim 7, wherein applying the hybridization function further comprises determining, by the at least one processor, a larger percentile range for each successively higher-percentiled agent of the plurality of agents than respectively lower-percentiled agents.

12. The method of claim 1, wherein a selected agent of the selected pair is not any of:

an agent lagging in a fairness metric,
an agent rated highest in a performance metric,
an agent rated highest in a performance metric for a particular contact type, or
an agent previously assigned to a contact of the selected pair,.

13. The method of claim 1, wherein each successively higher-percentiled agent of the plurality of agents is more likely to be selected than respectively lower-percentiled agents.

14. The method of claim 1, wherein each successively higher-percentiled agent of the plurality of agents is targeted to have a lower average waiting time than respectively lower-percentiled agents.

15. A system (140) for pairing in a contact center system (100), the contact center system comprising at least one switch (120A, 120B) communicatively coupled to a plurality of agents (130A, 130B, 130C, 130D), and the system (140) comprising at least one processor, wherein the at least one processor is configured to perform the method of any preceding claim.

**Patentansprüche**

1. Verfahren zur Paarung in einem Kontaktcenter-System (100), wobei das Kontaktcenter-System mindestens einen Switch (120A, 120B) aufweist, der kommunikativ mit einer Vielzahl von Agenten (130A, 130B, 130C, 130D) gekoppelt ist, das Verfahren Folgendes umfassend:

Bestimmen (810), durch mindestens einen Prozessor, eines Perzentils für einen Kontakt;
Bestimmen (820), durch den mindestens einen Prozessor, eines Perzentils für jeden der Vielzahl von Agenten;
Anwenden (830), durch den mindestens einen Prozessor, einer Hybridisierungsfunktion auf jedes der Perzentile der Vielzahl von Agenten, um das Perzentil von jedem der Vielzahl von Agenten basierend auf einer Verhaltens-Paarungsstrategie zur Paarung und einer leistungsbasierten Routingstrategie zur Paarung anzupassen, wobei die Hybridisierungsfunktion die Verhaltens-Paarungsstrategie zur Paarung in Richtung der leistungsbasierten Routingstrategie zur Paarung beeinflusst;

Vergleichen (840), durch den mindestens einen Prozessor, einer ersten Differenz in Perzentil zwischen dem Perzentil des Kontakts und dem angepassten Perzentil eines ersten Agenten in einem ersten Paar mit einer zweiten Differenz in Perzentil zwischen dem Perzentil des Kontakts und dem angepassten Perzentil eines zweiten Agenten, der von dem ersten Agenten verschieden ist, in einem zweiten Paar; und

Auswählen (850), durch den mindestens einen Prozessor, des ersten Paares oder des zweiten Paares für Verbindung basierend auf dem Vergleich.

2. Verfahren nach Anspruch 1,
wobei das Vergleichen (840), basierend auf der Hybridisierungsfunktion, ferner das Anwenden, durch den mindestens einen Prozessor, einer Biegediagonalstrategie auf die Perzentile umfasst, wobei die Biegediagonalstrategie als eine Exponentialkurve zwischen dem Perzentil des Kontakts und den angepassten Perzentilen jedes der Vielzahl von Agenten erzeugt wird, und wobei das Auswählen (850) ferner das Auswählen, durch den mindestens einen Prozessor, des ersten Paares oder des zweiten Paares umfasst, welches auch immer der Exponentialkurve am nächsten ist.

3. Verfahren nach Anspruch 1, wobei das Perzentil des Kontakts oder die Perzentile der Vielzahl von Agenten als Perzentilbereiche ausgedrückt werden können.

4. Verfahren nach Anspruch 3, wobei das Anwenden (830) der Hybridisierungsfunktion ferner das Anpassen der Perzentilbereiche der Vielzahl von Agenten umfasst.

5. Verfahren nach Anspruch 4, wobei das angepasste Perzentil jedes der Vielzahl von Agenten einen Mittelpunkt eines Perzentilbereichs von jedem der Vielzahl von Agenten umfasst.

6. Verfahren nach Anspruch 1, wobei das Bestimmen eines Perzentils für den Kontakt (810) ferner das Bestimmen, durch den mindestens einen Prozessor, eines Perzentilbereichs für einen Kontakttyp des Kontakts proportional zu einer Frequenz, bei der Kontakte des Kontakttyps für eine Zuordnung verfügbar werden, umfasst.

7. Verfahren nach Anspruch 1, wobei die Hybridisierungsfunktion eine kontrollierbare Zielerfassung, durch den mindestens einen Prozessor, einer unausgeglichenen Agentenauslastung ermöglicht.

8. Verfahren nach Anspruch 7, wobei das Anwenden (830) der Hybridisierungsfunktion ferner das Bestimmen eines Parameters umfasst, der einem Ausmaß einer Beeinflussung in Richtung der leistungsbasierten Routingstrategie entspricht.

9. Verfahren nach Anspruch 8, das ferner die Nutzung des Parameters innerhalb einer stetig differenzierbaren Funktion umfasst.

10. Verfahren nach Anspruch 8, das ferner die Nutzung des Parameters innerhalb einer nicht stetig differenzierbaren Funktion umfasst.

11. Verfahren nach Anspruch 7, wobei das Anwenden der Hybridisierungsfunktion ferner das Bestimmen, durch den mindestens einen Prozessor, eines größeren Perzentilbereichs für jeden sukzessiv höher prozentuierten Agenten der Vielzahl von Agenten als jeweils niedriger prozentuierte Agenten umfasst.

12. Verfahren nach Anspruch 1, wobei ein ausgewählter Agent des ausgewählten Paares keiner der folgenden ist:

ein Agent, der in einer Fairness-Metrik zurückbleibt,
ein Agent, der in einer Leistungs-Metrik am höchsten bewertet wird,
ein Agent, der in einer Leistungs-Metrik für einen bestimmten Kontakttyp am höchsten bewertet wird, oder
ein Agent, der vorher einem Kontakt eines ausgewählten Paares zugewiesen wurde.

13. Verfahren nach Anspruch 1, wobei jeder sukzessiv höher prozentuierte Agent der Vielzahl von Agenten eher ausgewählt wird als jeweils niedriger prozentuierte Agenten.

14. Verfahren nach Anspruch 1, wobei jeder sukzessiv höher prozentuierte Agent der Vielzahl von Agenten vorherbestimmt ist, eine kürzere durchschnittliche Wartezeit als jeweils niedriger prozentuierte Agenten zu haben.

15. System (140) zur Paarung in einem Kontaktcenter-System (100), wobei das Kontaktcenter-System mindestens einen Switch (120A, 120B) aufweist, der kommunikativ mit einer Vielzahl von Agenten (130A, 130B, 130C, 130D) gekoppelt ist, und das System (140) mindestens einen Prozessor aufweist, wobei der mindestens eine Prozessor dazu ausgelegt ist, das Verfahren nach einem beliebigen vorhergehenden Anspruch durchzuführen.

## Revendications

1. Procédé d'appariement dans un système de centre d'appel (100), le système de centre d'appel comprenant au moins un commutateur (120A, 120B) couplé de manière communicative à une pluralité d'agents (130A, 130B, 130C, 130D), le procédé comprenant les étapes suivantes :

   déterminer (810), par au moins un processeur, un percentile pour un contact ;
   déterminer (820), par l'au moins un processeur, un percentile pour chacun de la pluralité d'agents ;
   appliquer (830), par l'au moins un processeur, une fonction d'hybridation à chacun des percentiles de la pluralité d'agents pour ajuster le percentile de chacun de la pluralité d'agents sur la base d'une stratégie d'appariement comportemental pour l'appariement et d'une stratégie de routage basée sur la performance pour l'appariement, où la fonction d'hybridation biaise la stratégie d'appariement comportemental pour l'appariement vers la stratégie de routage basée sur la performance pour l'appariement ;
   comparer (840), par l'au moins un processeur, une première différence de percentile entre le percentile du contact et le percentile ajusté d'un premier agent dans une première paire avec une seconde différence de percentile entre le percentile du contact et le percentile ajusté d'un second agent différent du premier agent dans une seconde paire ; et
   sélectionner (850), par l'au moins un processeur, la première paire ou la seconde paire pour la connexion sur la base de la comparaison.

2. Procédé selon la revendication 1, dans lequel la comparaison (840) basée sur la fonction d'hybridation comprend en outre d'appliquer, par l'au moins un processeur, une stratégie de diagonale de flexion aux percentiles, où la stratégie de diagonale de flexion est générée sous la forme d'une courbe exponentielle entre le percentile du contact et les percentiles ajustés de chacun de la pluralité d'agents, et où la sélection (850) comprend en outre de sélectionner, par l'au moins un processeur, la première paire ou la seconde paire qui est la plus proche de la courbe exponentielle.

3. Procédé selon la revendication 1, dans lequel le percentile du contact ou les percentiles de la pluralité d'agents peuvent être exprimés sous forme de plages de percentiles.

4. Procédé selon la revendication 3, dans lequel l'application (830) de la fonction d'hybridation comprend en outre d'ajuster les plages de percentiles de la pluralité d'agents.

5. Procédé selon la revendication 4, dans lequel le percentile ajusté de chacun de la pluralité d'agents comprend un point médian d'une plage de percentiles de chacun de la pluralité d'agents.

6. Procédé selon la revendication 1, dans lequel la détermination d'un percentile pour le contact (810) comprend en outre de déterminer, par l'au moins un processeur, une plage de percentiles pour un type de contact du contact proportionnelle à une fréquence à laquelle les contacts du type de contact deviennent disponibles pour l'affectation.

7. Procédé selon la revendication 1, dans lequel la fonction d'hybridation permet de cibler de manière contrôlée, par l'au moins un processeur, une utilisation déséquilibrée de l'agent.

8. Procédé selon la revendication 7, dans lequel l'application (830) de la fonction d'hybridation comprend en outre de déterminer un paramètre correspondant à un degré de biais vers la stratégie de routage basée sur la performance.

9. Procédé selon la revendication 8, comprenant en outre d'utiliser le paramètre dans une fonction continument dérivable.

10. Procédé selon la revendication 8, comprenant en outre d'utiliser le paramètre dans une fonction non continument dérivable.

11. Procédé selon la revendication 7, dans lequel l'application de la fonction d'hybridation comprend en outre de déterminer, par l'au moins un processeur, une plage de percentiles plus large pour chaque agent ayant un percentile successivement plus élevé de la pluralité d'agents par rapport aux agents ayant un percentile respectivement moins élevé.

12. Procédé selon la revendication 1, dans lequel un agent sélectionné de la paire sélectionnée n'est pas l'un quelconque des agents suivants :

   un agent en retard dans une mesure d'équité,
   un agent ayant obtenu la meilleure note dans une mesure de performance,
   un agent ayant obtenu la meilleure note dans une mesure de performance pour un type de contact particulier, ou

un agent précédemment assigné à un contact de la paire sélectionnée.

**13.** Procédé selon la revendication 1, dans lequel chaque agent ayant un percentile successivement plus élevé de la pluralité d'agents a plus de chances d'être sélectionné que des agents ayant un percentile respectivement moins élevé.

**14.** Procédé selon la revendication 1, dans lequel chaque agent ayant un percentile successivement plus élevé de la pluralité d'agents est ciblé pour avoir un temps d'attente moyen inférieur par rapport à celui des agents ayant un percentile respectivement moins élevé.

**15.** Système (140) pour l'appariement dans un système de centre d'appel (100), le système de centre d'appel comprenant au moins un commutateur (120A, 120B) couplé de manière communicative à une pluralité d'agents (130A, 130B, 130C, 130D), et le système (140) comprenant au moins un processeur, où l'au moins un processeur est configuré pour exécuter le procédé de l'une quelconque des revendications précédentes.

**Contact Center System**
**100**

Central Switch
110

Hybrid Behavioral
Pairing Module
140

Contact Center
Switch
120A

Contact Center
Switch
120B

Agent
130A

Agent
130B

Agent
130C

Agent
130D

FIG. 1

Queue
200

BP Strategy 210

Contact
Percentile
Ranges

0.75 – 1.00

0.50 – 0.75

0.25 – 0.50

0.00 – 0.25

0.125          0.375          0.625          0.875

Agent
Percentile
Midpoints

FIG. 2

FIG. 3

Queue
400

HBP Strategy 410

0.75 – 1.00

Contact
Percentile
Ranges

0.50 – 0.75

0.25 – 0.50

0.00 – 0.25

0.00  0.06        0.25              0.56

—     —          —                 —

0.06  0.25        0.56              1.00

Adjusted
Agent
Percentile
Ranges

FIG. 4

Queue
**500**

HBP Strategy **510**

Contact
Percentile
Ranges

0.75 – 1.00

0.50 – 0.75

0.25 – 0.50

0.00 – 0.25

| 0.00 | 0.25 | 0.50 | 0.75 |
| --- | --- | --- | --- |
| 0.25 | 0.50 | 0.75 | 1.00 |

Agent
Percentile
Ranges

FIG. 5

FIG. 6

Queue
700

HBP Strategy 710

Contact
Percentile
Ranges

0.75 – 1.00

0.50 – 0.75

0.25 – 0.50

0.00 – 0.25

0.125          0.375          0.625          0.875

Agent
Percentile
Midpoints

FIG. 7

Hybrid Behavioral
Pairing Method
800

810 — Determine percentile for each available contact

820 — Determine percentile for each available agent

830 — Apply hybridization function to agent percentiles

840 — Determine pair of an available contact and an available agent with most similar percentiles based on hybridization function

850 — Cause available contact of the pair to be connected to available agent of the pair

FIG. 8

**EP 3 384 664 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2014341370 A1
- US 2013251137 A1

- US 7798876 B, Bala